# EUROPEAN PATENT APPLICATION

(11) **EP 3 041 163 A1**
(43) Date of publication of application: **06.07.2016**
(21) Application number: 13892631.6
(22) Date of filing: 27.08.2013
(51) Int. Cl.: H04L 9/08

(54) **DATA PROCESSING APPARATUS, DATA PROCESSING METHOD AND PROGRAM**

(71) Applicant: Mitsubishi Electric Corporation, Tokyo 100-8310 (JP)
(72) Inventor: SAKURAI, Shoji, Tokyo 100-8310 (JP); KAWAUCHI, Kiyoto, Tokyo 100-8310 (JP); UEDA, Takeshi, Tokyo 100-8310 (JP); NEGI, Tomonori, Tokyo 100-8310 (JP)
(74) Representative: Pfenning, Meinig & Partner mbB
(86) International application number: PCT/JP2013/072809
(87) International publication number: WO 2015/029129

(57) **Abstract**

An information leakage prevention apparatus 100 receives, from a LAN 109, communication data transmitted by a PC 112 to Internet 111, and when the received data has been encrypted, analyzes a log describing content of data processing performed in the PC 112 and extracts a key used to encrypt the communication data in the PC 112. Further, the information leakage prevention apparatus 100 decrypts the communication data using the extracted key and determines whether or not a keyword is included in a decryption result. If the keyword is not included in the decryption result, the information leakage prevention apparatus 100 transmits the communication data to the Internet 111 through a WAN 110.

## Description

### Technical Field

The present invention relates to a technique for preventing leakage of information.

### Background Art

A conventional information leakage prevention apparatus prevents leakage of personal information by detecting communication data including the personal information by pattern matching between the communication data and the personal information (for example, Patent Literature 1).

### Citation List

### Patent Literature

Patent Literature 1: WO2012/132296 A1

### Summary of Invention

### Technical Problem

The conventional information leakage prevention apparatus detects communication data including personal information or the like by pattern matching. There is a problem that it is not possible to discern whether or not personal information or the like is included in communication data if the communication data has been encrypted.

The present invention primarily aims to solve the above-described problem, and primarily aims to realize a configuration capable of preventing leakage of information even if communication data has been encrypted.

### Solution to Problem

A data processing apparatus according to the present invention is connected with a first communication path and a second communication path and is connected with a communication apparatus through the first communication path, and the data processing apparatus includes:
a receiving unit to receive, from the first communication path, data transmitted by the communication apparatus to the second communication path;
a key extracting unit to, when the data received by the receiving unit has been encrypted, extract a key used to encrypt the data in the communication apparatus by analyzing a log describing content of data processing which has been performed in the communication apparatus;
a decryption unit to decrypt the data using the key extracted by the key extracting unit;
a keyword search unit to determine whether or not a keyword is included in a decryption result by the decryption unit; and
a transmitting unit to transmit the data to the second communication path when the keyword search unit determines that the keyword is not included in the decryption result.

### Advantageous Effects of Invention

According to the present invention, a key used to encrypt data is extracted by analyzing a log, and the data is decrypted using the extracted key. Thus, leakage of information can be prevented even if the data has been encrypted.

### Brief Description of Drawings

Fig. 1 is a diagram illustrating an information leakage prevention apparatus and a PC according to a first embodiment;
Fig. 2 is a diagram illustrating the content stored on a hard disk of the information leakage prevention apparatus according to the first embodiment;
Fig. 3 is a diagram illustrating the content stored on a hard disk of the PC according to the first embodiment;
Fig. 4 illustrates an example of a network communication record according to the first embodiment;
Fig. 5 is a diagram illustrating an example of an encryption program data format table according to the first embodiment;
Fig. 6 is a diagram illustrating an example of keyboard/mouse input record information according to the first embodiment;
Fig. 7 is a diagram illustrating an example of file input/output record information according to the first embodiment;
Fig. 8 is a diagram illustrating an example of network record information according to the first embodiment;
Fig. 9 is a flowchart illustrating an example of the operation of the information leakage prevention apparatus according to the first embodiment;
Fig. 10 is a flowchart illustrating an example of the operation of a key extracting unit according to the first embodiment;
Fig. 11 is a flowchart illustrating an example of the operation of an information leakage prevention apparatus according to a second embodiment;
Fig. 12 is a flowchart illustrating an example of the operation of a key extracting unit according to the second embodiment;
Fig. 13 is a diagram illustrating an information leakage prevention apparatus, a server apparatus, and a thin client terminal according to a third embodiment;
Fig. 14 is a diagram illustrating the content stored on a hard disk of the information leakage prevention apparatus according to the third embodiment;
Fig. 15 is a diagram illustrating the content stored on a hard disk of the server apparatus according to the third embodiment;
Fig. 16 is a diagram illustrating the content stored on a virtual hard disk according to the third embodiment;
Fig. 17 is a flowchart illustrating an example of the operation of the information leakage prevention apparatus according to the third embodiment; and
Fig. 18 is a diagram illustrating an example of functional modules of the information leakage prevention apparatuses according to the first to third embodiments.

### Description of Embodiments

### First Embodiment

This embodiment describes an information leakage prevention apparatus that prevents leakage of highly confidential information such as personal information even if communication data has been encrypted.

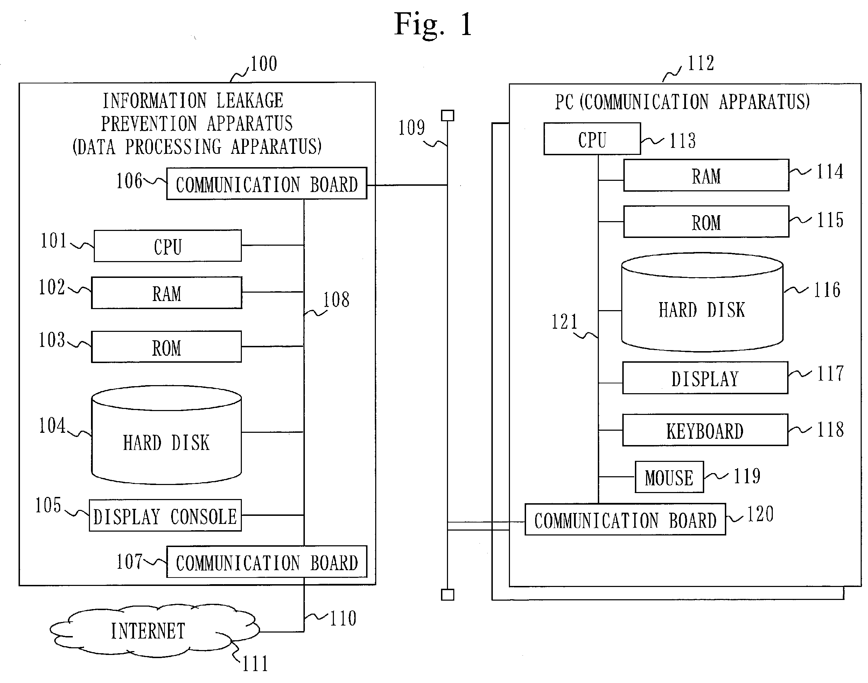

Fig. 1 illustrates an example of the hardware configuration of an information leakage prevention apparatus 100 and a PC (Personal Computer) 112 according to a first embodiment.

Referring to Fig. 1, the information leakage prevention apparatus 100 includes a CPU (Central Processing Unit) 101, a RAM (Random Access Memory) 102, a ROM (Read Only Memory) 103, a hard disk 104, a display console 105, a communication board 106, and a communication board 107, and these are connected to a bus 108.

The information leakage prevention apparatus 100 is connected to a LAN (Local Area Network) 109 through the communication board 106.

The information leakage prevention apparatus 100 is also connected to a WAN (Wide Area Network) 110 through the communication board 107.

The WAN 110 is connected to Internet 111.

The PC 112 is connected to the LAN 109.

Normally, there exists a plurality of the PCs 112.

The PC 112 includes a CPU 113, a RAM 114, a ROM 115, a hard disk 116, a display 117, a keyboard 118, a mouse 119, and a communication board 120, and these are connected to a bus 121.

The communication board 120 is connected to the LAN 109.

The information leakage prevention apparatus 100 is an example of a data processing apparatus, and the PC 112 is an example of a communication apparatus.

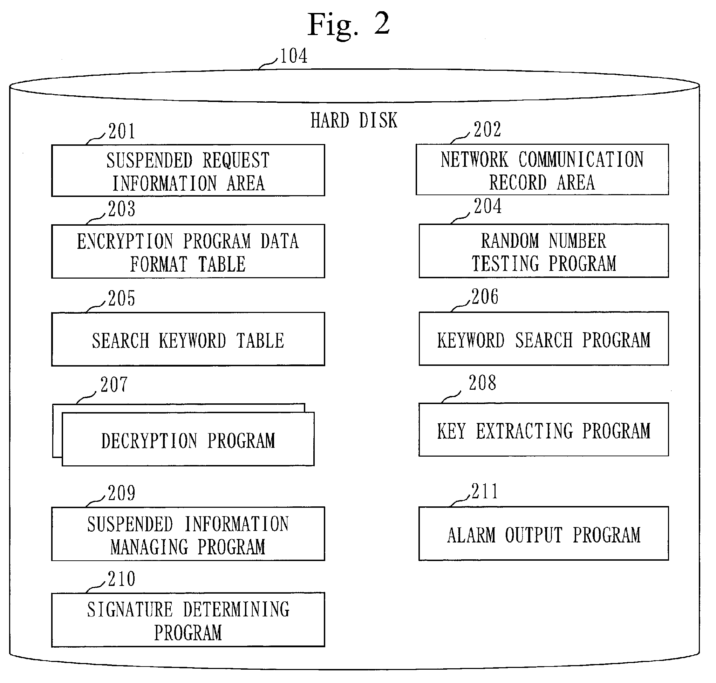

Fig. 2 illustrates data, programs, and so on to be stored on the hard disk 104 of the information leakage prevention apparatus 100.

A suspended request information area 201 is an area for storing communication data received by the communication board 106.

A network communication record area 202 is a table area for recording information about the communication data received by the communication board 106.

An encryption program data format table 203 is a table that describes information about an encryption program.

A random number testing program 204 is a program that is used to determine whether or not data has been encrypted.

The random number testing program 204 is, for example, a program such as NIST SP-800-22 and DIEHARD.

The random number testing program 204 is loaded from the hard disk 104 into the RAM 102 and is executed by the CPU 101.

A search keyword table 205 is a table that describes a keyword which should not be leaked.

A keyword search program 206 is a program for searching whether or not the keyword in the search keyword table 205 is included in the communication data.

The search keyword table 205 is loaded from the hard disk 104 into the RAM 102 and is executed by the CPU 101.

A decryption program 207 is a decryption program supporting a common key encryption method.

The decryption program 207 is, for example, a decryption program supporting the AES (Advanced Encryption Standard).

The decryption program 207 is loaded from the hard disk 104 into the RAM 102 and is executed by the CPU 101.

The decryption program 207 varies with each encryption method, and there exists a plurality of the decryption programs 207.

A key extracting program 208 is a program for extracting a key which has been used to encrypt the communication data from various types of logs of the PC 112.

The key extracting program 208 is loaded from the hard disk 104 into the RAM 102 and is executed by the CPU 101.

A suspended information managing program 209 is a program for suspending the communication data received by the communication board 106 and canceling the suspending in a predetermined case.

The suspended information managing program 209 is loaded from the hard disk 104 into the RAM 102 and is executed by the CPU 101.

A signature determining program 210 determines whether or not a prescribed signature is included in the communication data from the PC 112.

The signature determining program 210 is loaded from the hard disk 104 into the RAM 102 and is executed by the CPU 101.

An alarm output program 211 outputs an alarm in a predetermined case.

The alarm output program 211 is loaded from the hard disk 104 into the RAM 102 and is executed by the CPU 101.

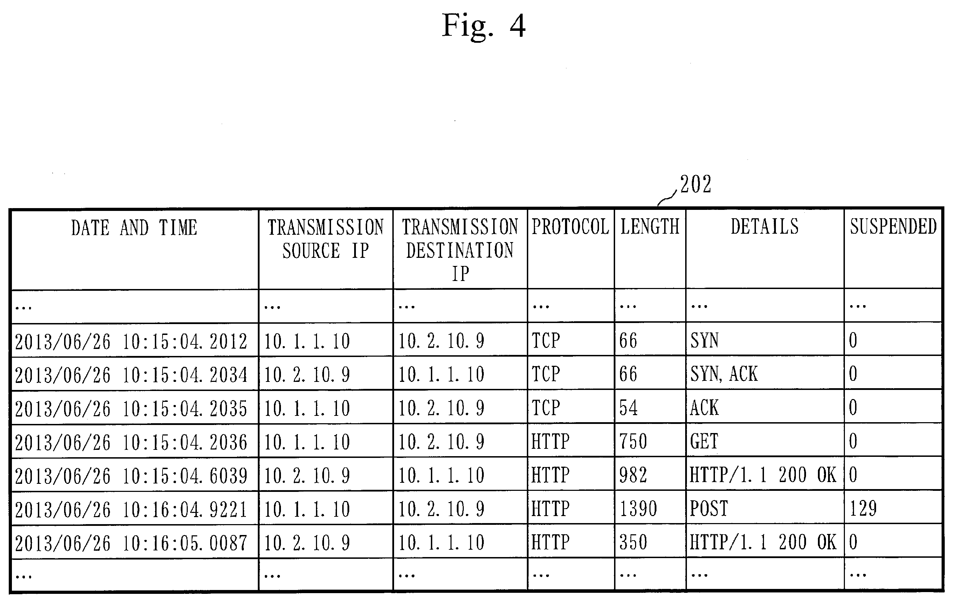

Fig. 4 is an example illustrating details of a network communication record to be stored in the network communication record area 202.

The network communication record area 202 contains a date and time of communication, a transmission source IP (Internet Protocol) address, a transmission destination IP address, a protocol, a packet length, details, and an ID (identifier) indicating an area where the suspended data is stored.

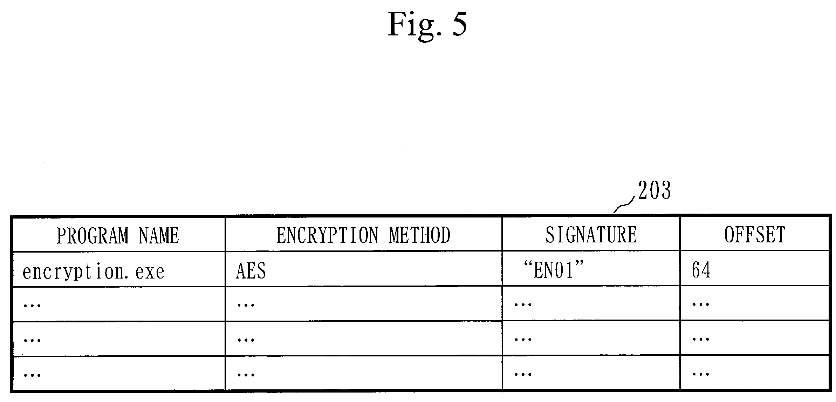

Fig. 5 illustrates a detailed example of the encryption program data format table 203.

The encryption program data format table 203 contains a program name, an encryption method, a string which is a signature included at the beginning of encryption data, and an offset to the encrypted data from the head.

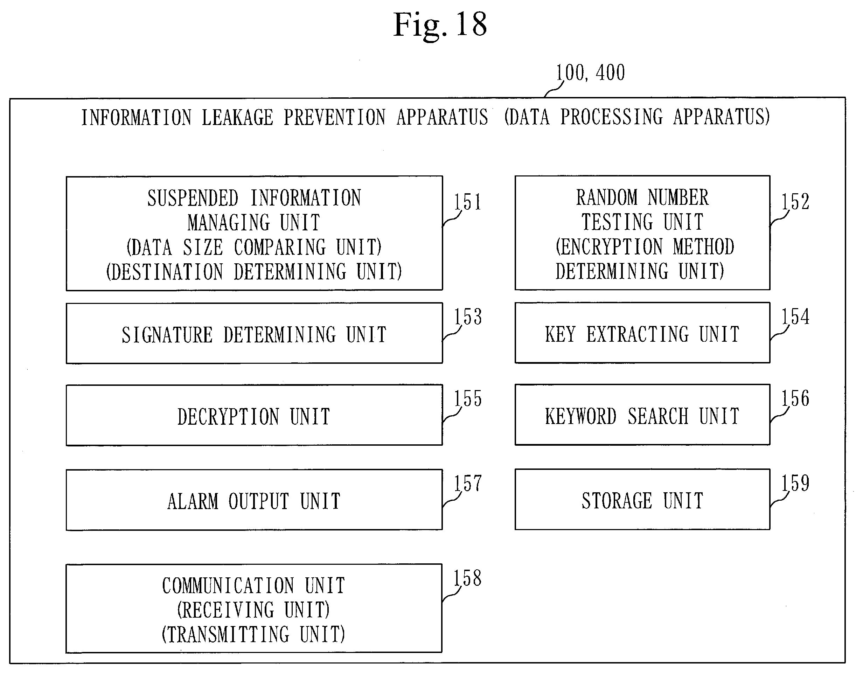

Fig. 18 illustrates functional modules that are implemented by the hardware (Fig. 1) and the programs (Fig. 2) of the information leakage prevention apparatus 100.

A suspended information managing unit 151 is a functional module that is implemented by the CPU 101 by executing the suspended information managing program 209.

The suspended information managing unit 151 stores the communication data received by the communication board 106 in the suspended request information area 201, retrieves the communication data from the suspended request information area 201, and outputs the retrieved communication data to the communication board 107.

A random number testing unit 152 is a functional module that is implemented by the CPU 101 by executing the random number testing program 204.

The random number testing unit 152 determines whether or not the communication data stored in the suspended request information area 201 has been encrypted.

The communication data stored in the suspended request information area 201 will hereinafter also be referred to as suspended data.

A signature determining unit 153 is a functional module that is implemented by the CPU 101 by executing the signature determining program 210.

The signature determining unit 153 determines whether or not a prescribed signature is included in the communication data, if the communication data has been encrypted.

When the communication data has been encrypted with a legitimate encryption method, a signature indicating this encryption method is included in the communication data.

The signature determining unit 153 corresponds to an example of an encryption method determining unit.

A key extracting unit 154 is a functional module that is implemented by the CPU 101 by executing the key extracting program 208.

The key extracting unit 154 extracts a key which has been used to encrypt the communication data in the PC 112 by analyzing a log describing the content of data processing performed in the PC 112.

More specifically, the key extracting unit 154 analyzes the content of a transmission process of the communication data described in the log, and identifies an encryption process that had been performed on the communication data prior to the transmission process.

The key extracting unit 154 also analyzes the content of the encryption process described in the log, and identifies an input process that was performed in association with the encryption process.

Then, the key extracting unit 154 analyzes the content of the input process described in the log, and extracts a string that was input to the PC 112 in the input process, as the key used to encrypt the communication data.

A decryption unit 155 is a functional module that is implemented by the CPU 101 by executing the decryption program 207.

The decryption unit 155 decrypts the communication data using the key extracted by the key extracting unit 154.

A keyword search unit 156 is a functional module that is implemented by the CPU 101 by executing the keyword search program 206.

The keyword search unit 156 determines whether or not a keyword is included in a decryption result obtained by the decryption unit 155.

If the keyword search unit 156 determines that the keyword is not included in the decryption result, the suspended information managing unit 151 retrieves the communication data from the suspended request information area 201 and outputs the retrieved communication data to the communication board 107.

An alarm output unit 157 is a functional module that is implemented by the CPU 101 by executing the alarm output program 211.

The alarm output unit 157 outputs an alarm when the prescribed signature is not included in the communication data or when the keyword is included in the communication data.

A communication unit 158 is a functional module that is implemented by the communication board 106 and the communication board 107.

The communication unit 158 receives the communication data from the PC 112 through the LAN 109, and transmits the communication data to the Internet 111 through the WAN 110.

The communication unit 158 corresponds to an example of a receiving unit and a transmitting unit.

The LAN 109 corresponds to an example of a first communication path, and the WAN 110 and the Internet 111 correspond to an example of a second communication path.

A storage unit 159 is a functional module that is implemented by the RAM 102, the ROM 103, and the hard disk 104.

The storage unit 159 stores the elements illustrated in Fig. 2, and also stores data, signal values, and variable values indicating results of processes described as "recognize", "determine", "extract", "detect", "set", "decrypt", "select", "generate", "input", "output", and so on in the following description.

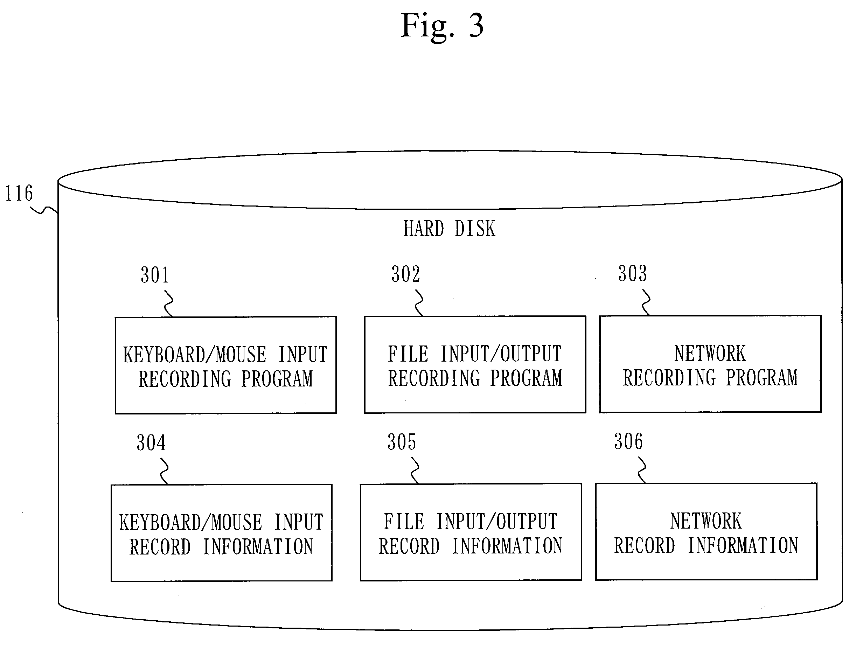

Fig. 3 illustrates data and programs to be stored on the hard disk 116 of the PC 112.

A keyboard/mouse input recording program 301 is a program for recording a string that is input from the keyboard or the mouse.

The keyboard/mouse input recording program 301 is loaded from the hard disk 116 into the RAM 114 and is executed by the CPU 113.

A file input/output recording program 302 is a program for recording information about an API (Application Programming Interface) call regarding input/output of a file.

The file input/output recording program 302 is loaded from the hard disk 116 into the RAM 114 and is executed by the CPU 113.

A network recording program 303 is a program for recording information about an API call regarding network communication.

The network recording program 303 is loaded from the hard disk 116 into the RAM 114 and is executed by the CPU 113.

Keyboard/mouse input record information 304 is information about input from the keyboard or the mouse that is recorded on the hard disk 116 by the keyboard/mouse input recording program 301.

File input/output record information 305 is information about file input/output that is recorded on the hard disk 116 by the file input/output recording program 302.

Network record information 306 is information about a network process that is recorded on the hard disk 116 by the network recording program 303.

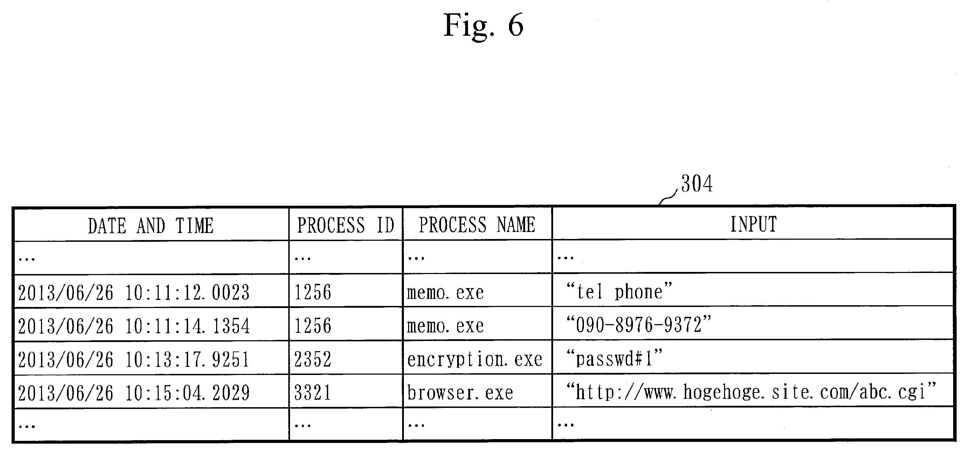

Fig. 6 illustrates a detailed example of the keyboard/mouse input record information 304.

The keyboard/mouse input record information 304 includes a date and time when input was performed, a process ID, a process name, and a string that was input.

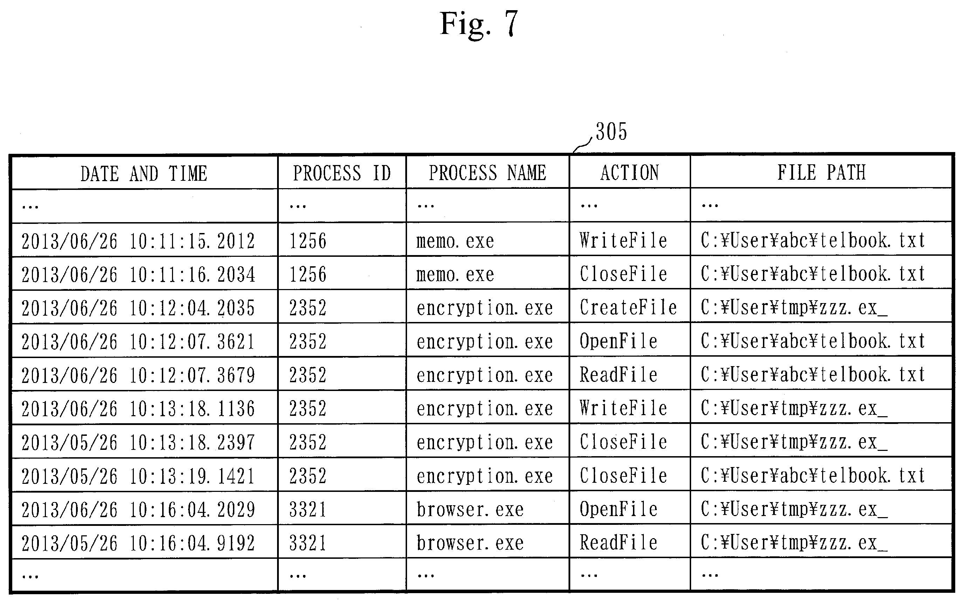

Fig. 7 illustrates a detailed example of the file input/output record information 305.

The file input/output record information 305 includes a date and time when input/output was performed, a process ID, a process name, an action, and a file path.

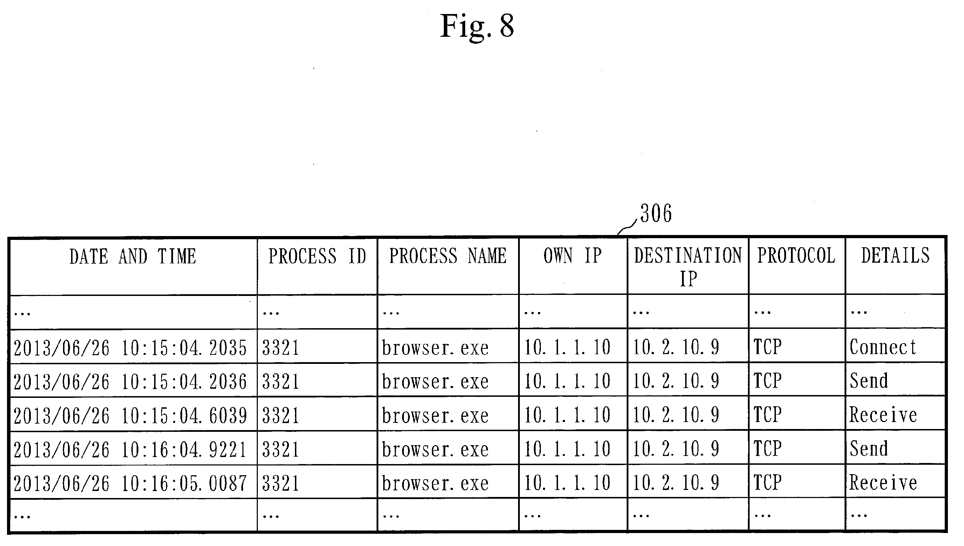

Fig. 8 illustrates a detailed example of the network record information 306.

The network record information 306 information includes a date and time when an action was performed on the network, a process ID, a process name, an own IP address, a destination IP address, a protocol, and details of the action.

The operation will now be described.

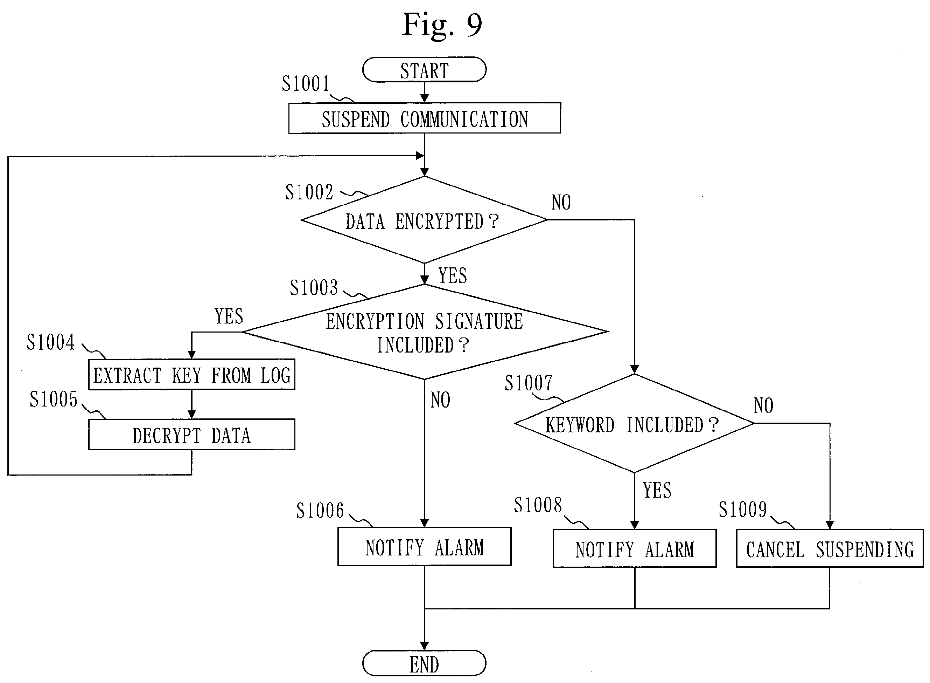

Fig. 9 is a flowchart illustrating a process when communication data destined for the Internet 111 is received by the communication board 106 of the information leakage prevention apparatus 100.

In the flow of Fig. 9, the program corresponding to each step is loaded into the RAM 102 and is executed by the CPU 101.

In step S1001, the suspended information managing unit 151 stores the received communication data in the suspended request information area 201 on the hard disk 104.

The suspended information managing unit 151 also registers an ID of the suspended request information area 201 together with information about the received communication data in the network communication record area 202.

Then, in step S1002, the random number testing unit 152 determines whether or not the communication data in the suspended request information area 201 is encrypted data (whether or not the communication data is random numbers).

Note that the random number testing unit 152 retrieves the communication data in the suspended request information area 201 based on the content of the network communication record area 202, and determines whether or not the communication data is encrypted data.

If the communication data is random numbers (if the communication data is encrypted data) as a result of the random number test in step S1002, the signature determining unit 153 determines in step S1003 whether or not an encryption signature is included in the communication data using the signatures in the encryption program data format table 203.

That is, the signature determining unit 153 determines whether or not a signature which is the same as one of the signatures described in the encryption program data format table 203 is included in the communication data.

Note that the signature determining unit 153 retrieves the communication data in the suspended request information area 201 based on the content of the network communication record area 202, and determines whether or not the signature is included in the communication data.

If it is determined in step S1003 that the encryption signature is included in the communication data, the key extracting unit 154 extracts a key from the log of the PC 112 in step S1004.

A key extracting procedure by the key extracting unit 154 will be described in detail later.

Then, in step S1005, the decryption unit 155 decrypts the communication data using the key extracted by the key extracting unit 154.

More specifically, the decryption program 207 corresponding to the encryption method corresponding to the signature identified in step S1003 is loaded from the hard disk 104 into the RAM 102, and the CPU 101 executes the loaded decryption program 207 and decrypts the encryption data from the offset position recorded in the encryption program data format table 203.

Note that the decryption unit 155 retrieves the communication data in the suspended request information area 201 based on the content of the network communication record area 202, and decrypts the communication data.

Then, in step S1002, the random number testing unit 152 determines whether or not the data decrypted in step S1005 is encrypted data.

If the data decrypted in step S1005 is encrypted data, the operation in S1003 and thereafter is repeated.

If the encryption signature is not included in the communication data in step S1003, the alarm output unit 157 displays an alarm on the display console 105 indicating that the communication data encrypted with an illegal original encryption method has been detected and terminates the process in step S1006.

If the communication data is not encrypted data in step S1002, the keyword search unit 156 determines in step S1007 whether or not a keyword included in the search keyword table 205 is included in the communication data.

If it is determined in step S1007 that the keyword is included in the communication data, the alarm output unit 157 displays an alarm on the display console 105 indicating that the keyword is included in the communication data and terminates the process in step S1008.

On the other hand, if it is determined in step S1007 that the keyword is not included in the communication data, the suspended information managing unit 151 takes out the suspended communication data from the suspended request information area 201 and outputs the communication data to the communication board 107, and the communication board 107 transmits the communication data to the destination on the Internet 111 in step S1009.

The suspended information managing unit 151 releases the suspended request information area 201 being used, clears the information about this communication data in the network communication record area 202, and terminates the process.

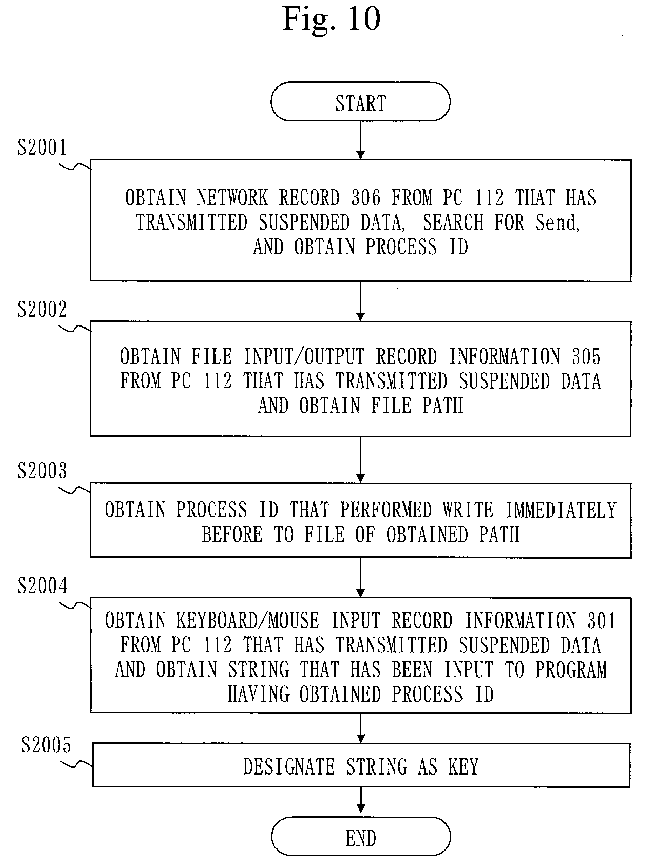

Fig. 10 is a flowchart illustrating a process for extracting a key from the log of the PC 112 by the key extracting unit 154.

In step S2001, the key extracting unit 154 obtains, through the communication board 106, the network record information 306 from the PC 112 that has transmitted the suspended data.

The key extracting unit 154 searches for a Send record of a time which is the same as or immediately before the transmission time described in the header of the suspended data, among Send records described in the network record information 306.

The key extracting unit 154 obtains a process ID described in the record that has been found.

Then, in S2002, the key extracting unit 154 obtains, through the communication board 106, the file input/output record information 305 from the PC 112 that has transmitted the suspended data.

The key extracting unit 154 obtains a file path read by the program having the process ID obtained in step S2001.

Then, in step S2003, the key extracting unit 154 obtains, from the file input/output record information 305, an ID of a process that performed a write to the file path obtained in step S2002 immediately before the read time.

Then, in step S2004, the key extracting unit 154 obtains, through the communication board 106, the keyboard/mouse input record information 304 from the PC 112 that has transmitted the suspended data.

The key extracting unit 154 obtains a string that has been input to the program having the process ID obtained in step S2003.

Lastly, in step S2005, the key extracting unit 154 designates the input string obtained in step S2004 as the encryption key and terminates the process.

For example, assume that the second "Send" record (date and time: 2013/06/26 10:16:04. 9221) in Fig. 8 is extracted in step S2001.

The key extracting unit 154 obtains "3321" described in the process ID column of this record.

Then, in step S2002, the key extracting unit 154 obtains "C¥User¥tmp¥zzz.ex_" which is a file path of (ReadFile) read by "browser.exe" which is a process name corresponding to "3321" in Fig. 7.

Then, in step S2003, the key extracting unit 154 obtains "2352" which is an ID of a process that performed a write (WriteFile) to "C¥User¥tmp¥zzz.ex_" immediately before the read time.

Then, the key extracting unit 154 obtains "passwd#1" which is a string that has been input to "encryption.exe" corresponding to "2352" in Fig. 6.

As described above, the information leakage prevention apparatus 100 according to this embodiment suspends encrypted communication data and extracts a key for decrypting the communication data from the log of the PC.

Then, the information leakage prevention apparatus 100 according to this embodiment decrypts the communication data using the extracted key and checks whether or not a keyword is included in the communication data.

Therefore, even if the communication data has been encrypted, it is possible to prevent an attempt to leak confidential information illegally from the PC to the Internet.

When the Internet is replaced with a printer, it is possible to prevent an attempt to leak encrypted confidential information by printing the encrypted confidential information and smuggling out a printed copy thereof.

In this case, a communication route between the information leakage prevention apparatus 100 and the printer corresponds to the second communication path.

When the Internet is replaced with a storage medium write device, it is possible to prevent an attempt to smuggle out encrypted confidential information by writing the encrypted confidential information to a storage medium.

In this case, a communication route between the information leakage prevention apparatus 100 and the storage medium write device corresponds to the second communication path.

This embodiment has described an information leakage prevention apparatus including
a suspended information managing unit to temporarily suspend transmission of communication data;
a random number testing unit to conduct a random number test on the communication data and detect that the data is encrypted data;
a key extracting unit to extract a key which has encrypted the communication data from a log of a terminal;
a decryption unit to decrypt the encrypted data using the extracted key; and
a keyword search unit to search whether or not information which is confidential information is included in the decrypted data,
wherein when the decrypted data includes the confidential information, the information leakage prevention apparatus prevents transmission of this data.

This embodiment has also described that the key extracting unit extracts the key which has encrypted the communication data from a keyboard/mouse input log, a file input/output log, and a network communication log.

### Second Embodiment

In the first embodiment described above, it is assumed that a user does not tamper with the log on the PC 112. This embodiment describes an information leakage prevention apparatus capable of dealing with a case where the log is tampered with.

The system configuration, the tables and programs on the hard disk, and the configuration of the functional modules of the information leakage prevention apparatus are the same as those of the first embodiment, and thus will not be described.

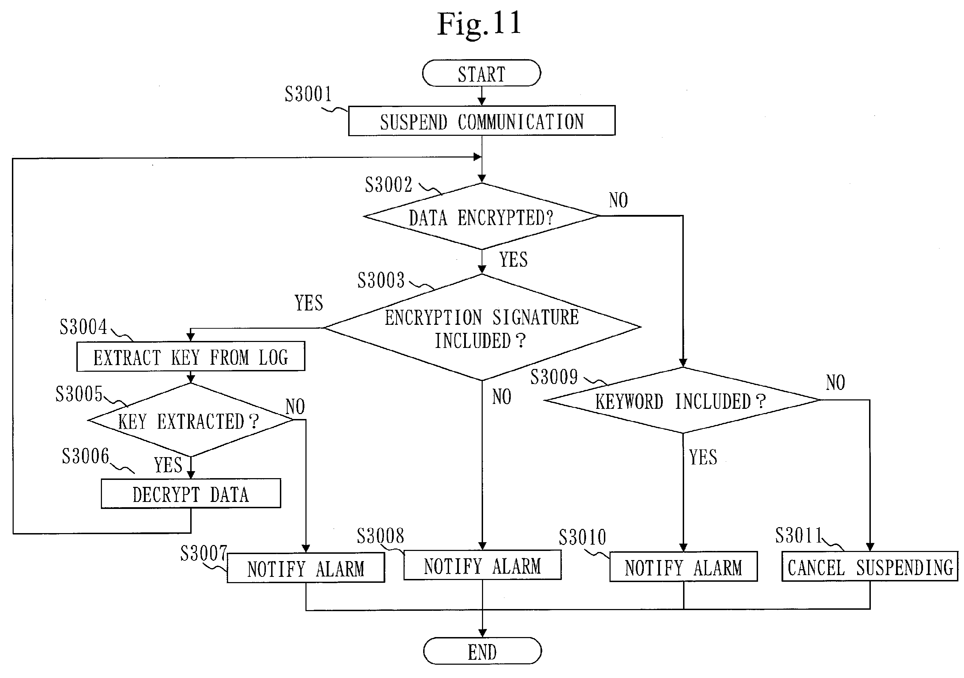

Fig. 11 is a flowchart illustrating a process when communication data destined for the Internet 111 is received by the communication board 106 of the information leakage prevention apparatus 100.

In Fig. 11, S3005 and S3007 are added to the flow of Fig. 9.

S3001 to S3004 are the same as S1001 to S1004 illustrated in Fig. 9. S3006 is the same as S1005 illustrated in Fig. 9. S3008 to S3011 are the same as S1006 to S1009 illustrated in Fig. 9.

Each step will be described below. The process that overlaps with the process described in the first embodiment will not be described in detail.

In step S3001, the suspended information managing unit 151 stores the received communication data in the suspended request information area 201 on the hard disk 104.

The suspended information managing unit 151 also registers an ID of the suspended request information area 201 together with information about the received communication data in the network communication record area 202.

Then, in step S3002, the random number testing unit 152 determines whether or not the communication data in the suspended request information area 201 is encrypted data (whether or not the communication data is random numbers).

If the communication data is random numbers (if the communication data is encrypted data) as a result of the random number test in step S3002, the signature determining unit 153 determines in step S3003 whether or not an encryption signature is included in the communication data using the signatures in the encryption program data format table 203.

If it is determined in step S3003 that the encryption signature is included in the communication data, the key extracting unit 154 analyzes the log of the PC 112 to extract a key in step S3004. In step S3005, the key extracting unit 154 determines whether or not the key has been extracted from the log.

If the key has been extracted in step S3005, the decryption unit 155 decrypts the communication data in step S3006 using the key extracted by the key extracting unit 154.

Then, in step S3002, the random number testing unit 152 determines whether or not the data decrypted in step S3006 is encrypted data.

If the data decrypted in step S3006 is encrypted data, the operation in S3003 and thereafter is repeated.

If the key has not been extracted in step S3005, the alarm output unit 157 displays an alarm on the display console 105 indicating that the log on the PC 112 is inconsistent and terminates the process in step S3007.

If the encryption signature is not included in the communication data in step S3003, the alarm output unit 157 displays an alarm on the display console 105 indicating that the communication data encrypted with an illegal original encryption method has been detected and terminates the process in step S3008.

If the communication data is not encrypted in step S3002, the keyword search unit 156 determines in step S3009 whether or not a keyword included in the search keyword table 205 is included in the communication data.

If it is determined in step S3009 that the keyword is included in the communication data, the alarm output unit 157 displays an alarm on the display console 105 indicating that the keyword is included in the communication data and terminates the process in step S3010.

On the other hand, if it is determined in step S3009 that the keyword is not included in the communication data, the suspended information managing unit 151 takes out the suspended communication data from the suspended request information area 201 and outputs the communication data to the communication board 107, and the communication board 107 transmits the communication data to the destination on the Internet 111 in step S3011.

The suspended information managing unit 151 releases the suspended request information area 201 being used, clears the information about this communication data in the network communication record area 202, and terminates the process.

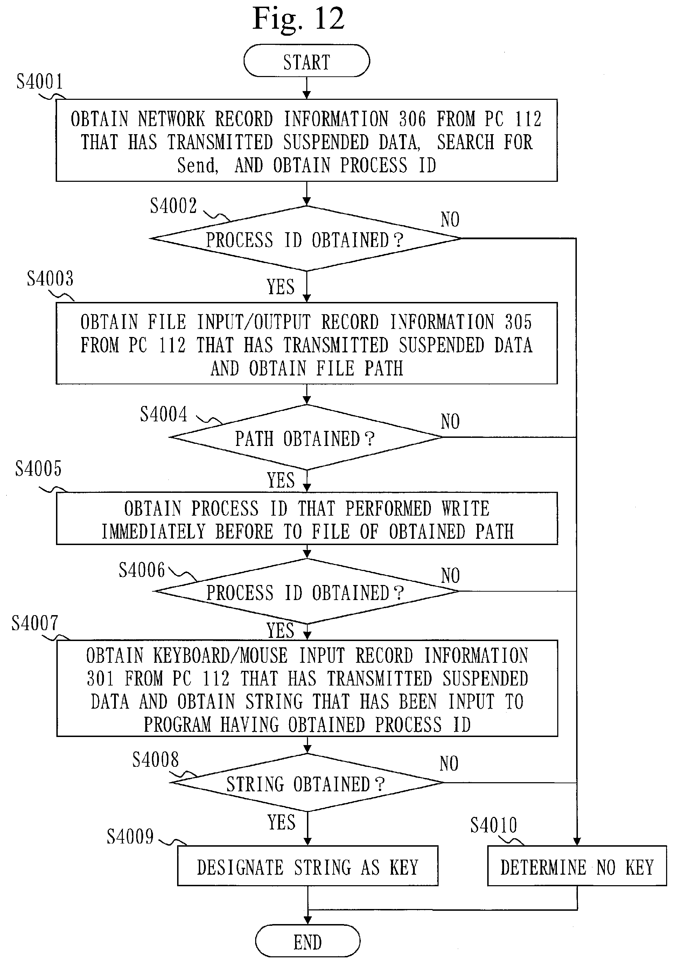

Fig. 12 is a flowchart illustrating a process for extracting a key from the log of the PC by the key extracting unit 154.

In Fig. 12, S4002, S4004, S4006, S4008, and S4010 are added to the flow illustrated in Fig. 10.

S4001, S4003, S4005, S4007, and S4009 are the same as S2001 to S2005 illustrated in Fig. 10.

Each step will be described below. The process that overlaps with the process in the first embodiment will not be described in detail.

In step S4001, the key extracting unit 154 obtains through the communication board 106 the network record information 306 from the PC 112 that has transmitted the suspended data.

The key extracting unit 154 searches for a Send record of a time which is the same as or immediately before the transmission time described in the header of the suspended data, among Send records described in the network record information 306.

The key extracting unit 154 obtains a process ID described in the record that has been found.

Then, in step S4002, the key extracting unit 154 checks whether or not the process ID has been obtained in step S4001. If the process ID has been obtained, the key extracting unit 154 proceeds to step S4003.

In step S4003, the key extracting unit 154 obtains, through the communication board 106, the file input/output record information 305 from the PC 112 that has transmitted the suspended data.

The key extracting unit 154 obtains a file path read by the program having the process ID obtained in step S4001.

Then, in step S4004, the key extracting unit 154 checks whether or not the file path has been obtained in step S4003. If the path has been obtained, the key extracting unit 154 proceeds to step S4005.

In step S4005, the key extracting unit 154 obtains, from the file input/output record information 305, an ID of a process that performed a write to the file path obtained in step S4003 immediately before the read time.

Then, in step S4006, the key extracting unit 154 checks whether or not the process ID has been obtained in step S4005. If the process ID has been obtained, the key extracting unit 154 proceeds to step S4007.

In step S4007, the key extracting unit 154 obtains, through the communication board 106, the keyboard/mouse input record information 304 from the PC 112 that has transmitted the suspended data.

The key extracting unit 154 obtains a string that has been input to the program having the process ID obtained in step S4005.

Then, in step S4008, the key extracting unit 154 checks whether or not the string has been obtained in step S4007. If the string has been obtained, the key extracting unit 154 designates the obtained string as the key and terminates the process in step S4009.

On the other hand, if it is determined in step S4002 that the process ID has not been obtained in step S4001, the key extracting unit 154 determines that there is no key and terminates the process in step S4010.

If it is determined in step S4004 that the path has not been obtained in step S4003, the key extracting unit 154 determines that there is no key and terminates the process in step S4010.

Further, if it is determined in step S4006 that the process ID has not been obtained in step S4005, the key extracting unit 154 determines that there is no key and terminates the process in step S4010.

Lastly, if it is determined in step S4008 that the string has not been obtained in step S4007, the key extracting unit 154 determines that there is no key and terminates the process in step S4010.

As described above, the information leakage prevention apparatus according to this embodiment detects an inconsistency in a log resulting from tampering of the log.

Therefore, even if a user of the PC or an attacker illegally intruding into the PC tampers with a log on the PC to avoid detection of information leakage, it is possible to prevent an attempt to leak confidential information illegally from the PC to the Internet.

This embodiment has described that if a log has been tampered with on the terminal, the information prevention apparatus detects the tampering of the log and does not transmit the communication data.

### Third Embodiment

In the first and second embodiments described above, a key is extracted by the information leakage prevention apparatus 100.

This embodiment presents an example where a terminal used by a user is a thin client terminal using virtualization technology and a key is extracted by a server apparatus of the thin client terminal.

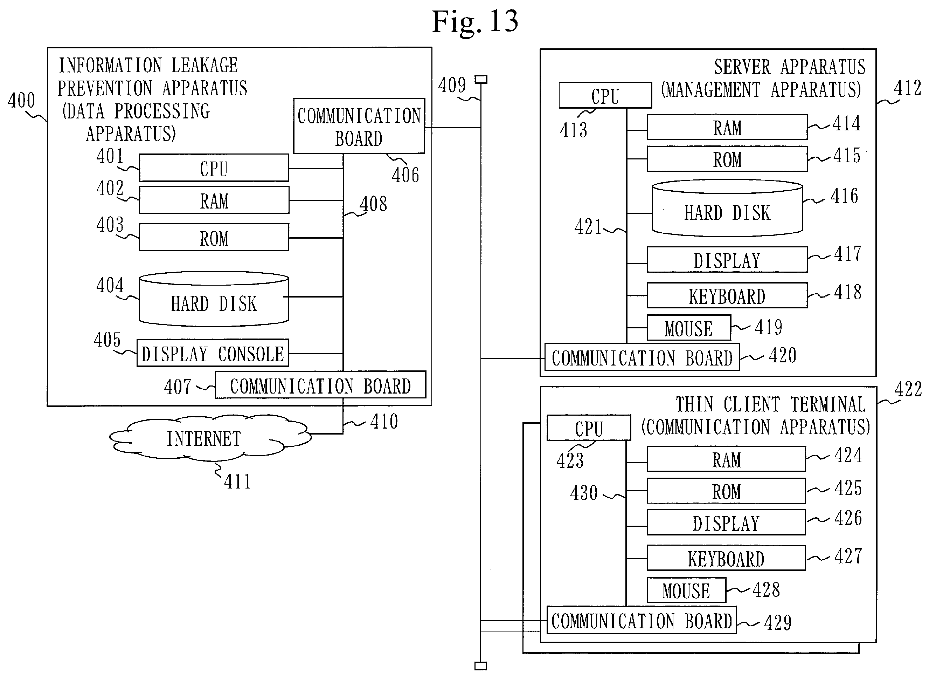

Fig. 13 is a hardware configuration diagram of an information leakage prevention apparatus 400, a server apparatus 412, and a thin client terminal 422 according to this embodiment.

In this embodiment, the information leakage prevention apparatus 400 is an example of the data processing apparatus, the server apparatus 412 is an example of a management apparatus, and the thin client terminal 422 is an example of the communication apparatus.

Referring to Fig. 13, the information leakage prevention apparatus 400 includes a CPU 401, a RAM 402, a ROM 403, a hard disk 404, a display console 405, a communication board 406, and a communication board 407, and these are connected to a bus 408.

The information leakage prevention apparatus 400 is connected to a LAN 409 through the communication board 406.

The information leakage prevention apparatus 400 is also connected to a WAN 410 through the communication board 407.

The WAN 410 is connected to an Internet 411.

The server apparatus 412 is connected to the LAN 409.

The server apparatus 412 includes a CPU 413, a RAM 414, a ROM 415, a hard disk 416, a display 417, a keyboard 418, a mouse 419, and a communication board 420, and these are connected to a bus 421.

The communication board 420 is connected to the LAN 409.

The thin client terminal 422 is connected to the LAN 409.

Normally, there exists a plurality of the thin client terminals 422.

The thin client terminal 422 includes a CPU 423, a RAM 424, a ROM 425, a display 426, a keyboard 427, a mouse 428, and a communication board 429, and these are connected to a bus 430.

The communication board 429 is connected to the LAN 409.

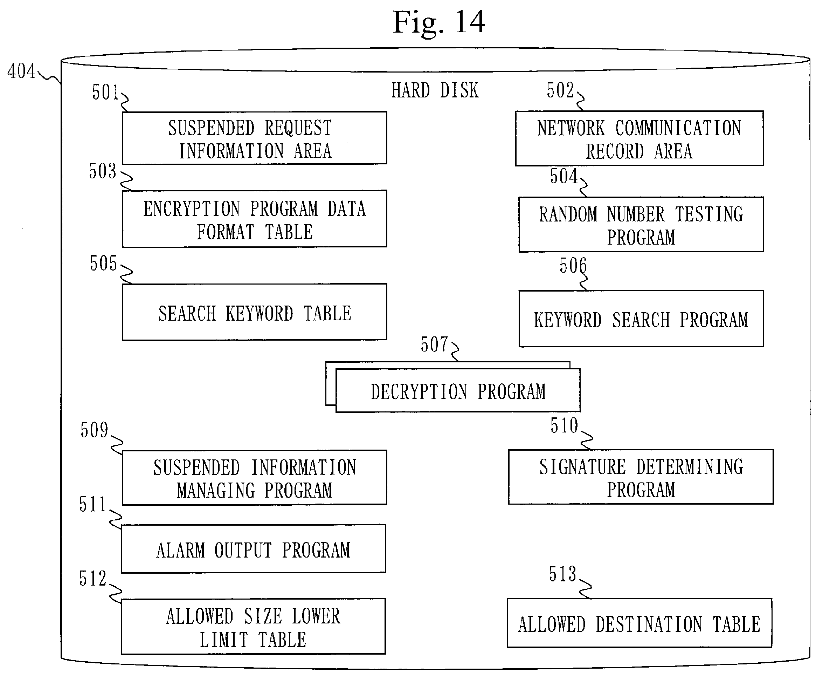

Fig. 14 illustrates data, programs, and so on to be stored on the hard disk 404.

In Fig. 14, the key extracting program 208 is deleted and an allowed size lower limit table 512 and an allowed destination table 513 are added, compared with the configuration of Fig. 2.

The allowed size lower limit table 512 describes a lower limit value for the data size of communication data to be subject to a keyword search.

If the data size of the received communication data is less than the data size described in the allowed size lower limit table 512, the suspending of the communication data is canceled without performing a keyword search.

The allowed destination table 513 describes a list of allowed destinations.

If the destination of the communication data is a destination described in the allowed destination table, the suspending of the communication data is canceled without performing a keyword search.

A suspended request information area 501 is substantially the same as the suspended request information area 201 of Fig. 2. A network communication record area 502 is substantially the same as the network communication record area 202 of Fig. 2. An encryption program data format table 503 is substantially the same as the encryption program data format table 203 of Fig. 2.

A random number testing program 504 is substantially the same as the random number testing program 204 of Fig. 2. A search keyword table 505 is substantially the same as the search keyword table 205 of Fig. 2. A keyword search program 506 is substantially the same as the keyword search program 206 of Fig. 2. A decryption program 507 is substantially the same as the decryption program 207 of Fig. 2.

The configuration of functional modules of the information leakage prevention apparatus 400 is as illustrated in Fig 18.

In this embodiment, the key extracting unit 154 communicates with a key extracting program 601 (to be described later) in the server apparatus 412, and obtains a key extracted by the key extracting program 601 by analyzing a log.

In this embodiment, the suspended information managing unit 151 determines whether or not the data size of the suspended communication data is less than the data size described in the allowed size lower limit table 512.

The suspended information managing unit 151 also determines whether or not the destination of the suspended communication data is a destination described in the allowed destination table.

In this embodiment, the suspended information managing unit 151 corresponds to an example of a data size comparing unit and a destination determining unit.

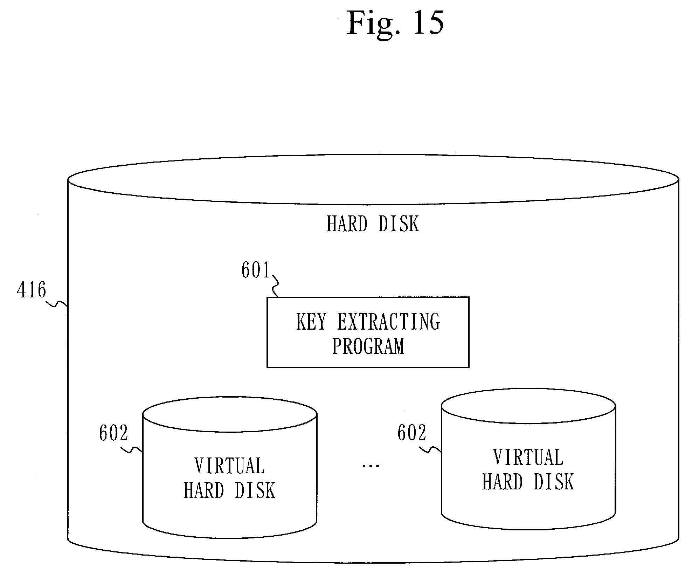

Fig. 15 illustrates data and programs to be stored on the hard disk 416 of the server apparatus 412.

The key extracting program 601 is a program for extracting an encryption key of the communication data from various types of logs of the thin client terminal 422.

The key extracting program 601 is loaded from the hard disk 416 into the RAM 414 and is executed by the CPU 413.

A virtual hard disk 602 is a partial area that is provided to the thin client terminal 422 as a virtual disk out of the hard disk 416.

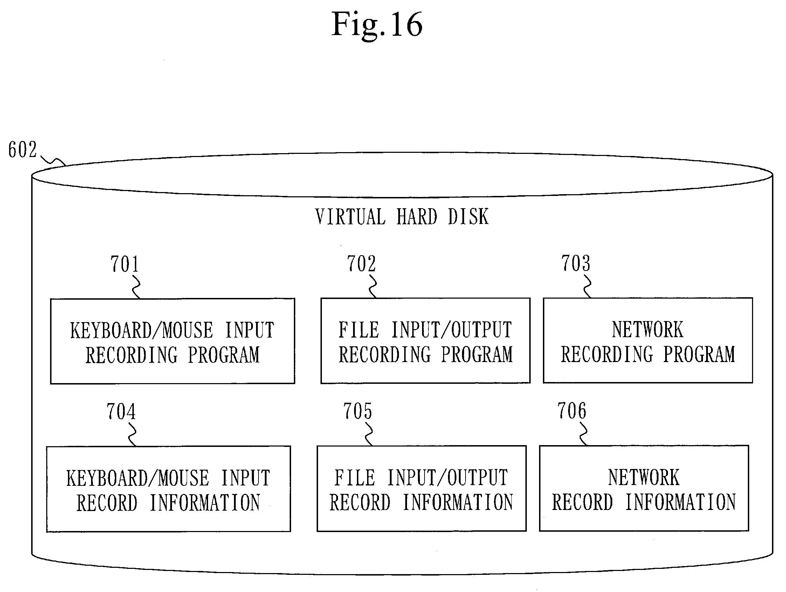

Fig. 16 illustrates data and programs to be stored on the virtual hard disk 602.

A keyboard/mouse input recording program 701 is a program for recording a string that is input from the keyboard.

The keyboard/mouse input recording program 701 is loaded from the virtual hard disk 602 (the hard disk 416) into the RAM 424 and is executed by the CPU 423.

A file input/output recording program 702 is a program for recording information about an API call regarding input/output of a file.

The file input/output recording program 702 is loaded from the virtual hard disk 602 (the hard disk 416) into the RAM 424 and is executed by the CPU 423.

A network recording program 703 is a program for recording information about an API call regarding network communication.

The network recording program 703 is loaded from the virtual hard disk 602 (the hard disk 416) into the RAM 424 and is executed by the CPU 423.

Keyboard/mouse input record information 704 is information about input from the keyboard or the mouse that is recorded on the virtual hard disk 602 by the keyboard/mouse input recording program 701.

File input/output record information 705 is information about file input/output that is recorded on the virtual hard disk 602 by the file input/output recording program 702.

Network record information 706 is information about a network process that is recorded on the virtual hard disk 602.

The operation will now be described.

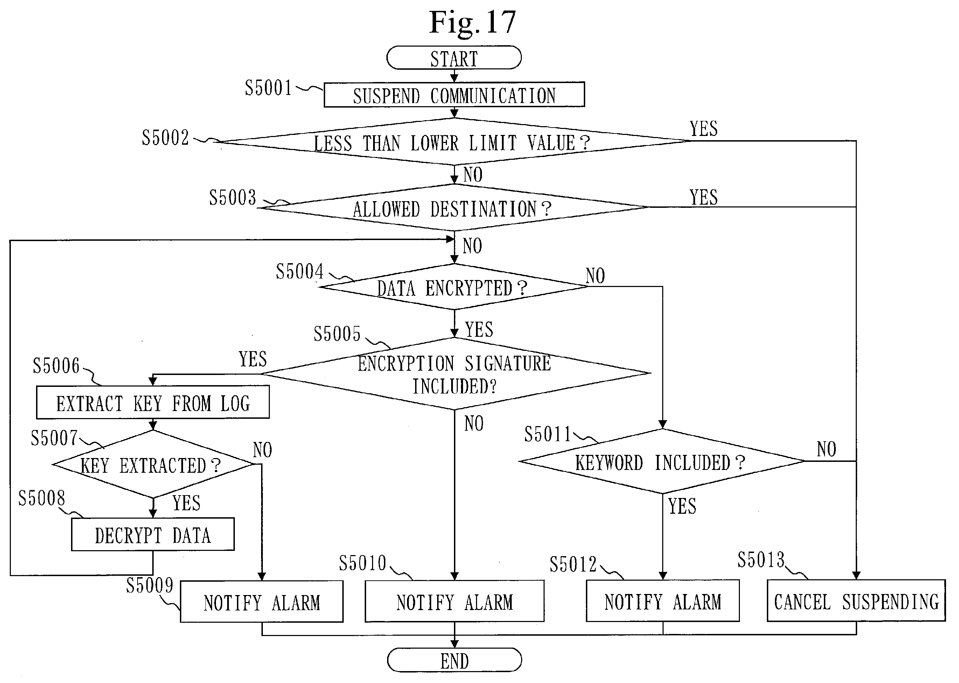

Fig. 17 is a flowchart illustrating a process when communication data destined for the Internet 411 is received by the communication board 406 of the information leakage prevention apparatus 400.

In Fig. 17, S5002 and S5003 are added to the flow of Fig. 11.

S5001 is the same as S3001 illustrated in Fig. 11. S5004 to S5013 are the same as S3002 to S3011 illustrated in Fig. 11.

Each step will be described below. The process that overlaps with the process described in the first and second embodiments will not be described in detail.

In step S5001, the suspended information managing unit 151 stores the received communication data in the suspended request information area 501 on the hard disk 404.

The suspended information managing unit 151 also registers an ID of the suspended request information area 501 together with information about the received communication data in the network communication record area 502.

Then, in step S5002, the suspended information managing unit 151 checks whether or not the data size of the communication data suspended in step S5001 is less than the lower limit value for the data size of communication data to be subject to a keyword search which is described in the allowed size lower limit table.

If the data size of the suspended communication data is equal to or greater than the lower limit value in step S5002, the suspended information managing unit 151 checks in step S5003 whether or not the destination of the communication data suspended in step S5001 is a destination described in the allowed destination table 513.

If the destination of the suspended communication data is not any of the destinations described in the allowed destination table 513 in step S5003, the random number testing unit 152 determines in step S5004 whether or not the communication data in the suspended request information area 501 is encrypted data (whether or not the communication data is random numbers).

If the communication data is random numbers (if the communication data is encrypted data) as a result of the random number test in step S5004, the signature determining unit 153 determines in step S5005 whether or not an encryption signature is included in the communication data using the signatures in the encryption program data format table 503.

If it is determined in step S5005 that the encryption signature is included in the communication data, the key extracting unit 154 remotely executes the key extracting program 601 on the server apparatus 412 in step S5006.

Then, in step S5007, the key extracting unit 154 determines whether or not the key extracting program 601 has extracted a key from the log.

The key extracting program 601 operates, for example, in accordance with the procedure indicated in the flow of Fig. 12.

If the key has been extracted in step S5007, the decryption unit 155 decrypts the communication data in step S5008 using the key extracted by the key extracting unit 154.

Then, in step S5004, the random number testing unit 152 determines whether or not the data decrypted in step S5008 is encrypted data.

If the data decrypted in step S5008 is encrypted data, the operation in S5005 and thereafter is repeated.

If the key has not been extracted in step S5007, the alarm output unit 157 displays an alarm on the display console 105 indicating that an inconsistency has occurred in the log on the thin client terminal 422 and terminates the process in step S5009.

If the encryption signature is not included in the communication data in step S5005, the alarm output unit 157 displays an alarm on the display console 405 indicating that the communication data encrypted with an illegal original encryption method has been detected and terminates the process in step S5010.

If the communication data is not encrypted in S5004, the keyword search unit 156 determines in step S5011 whether or not a keyword included in the search keyword table 405 is included in the communication data.

If it is determined in step S5011 that the keyword is included in the communication data, the alarm output unit 157 displays an alarm on the display console 405 indicating that the keyword is included in the communication data and terminates the process in step S5012.

On the other hand, if it is determined in step S5011 that the keyword is not included in the communication data, the suspended information managing unit 151 takes out the suspended communication data from the suspended request information area 501 and outputs the communication data to the communication board 407, and the communication board 407 transmits the communication data to the destination on the Internet 411 in step S5013.

The suspended information managing unit 151 releases the suspended request information area 501 being used, clears the information about this communication data in the network communication record area 502, and terminates the process.

As described above, by performing the process to extract a key from a log on the server where logs of the terminal are accumulated, the key can be extracted more rapidly.

Therefore, it is possible to check the content of encrypted communication data and prevent leakage of confidential information and also to reduce the time to suspend the communication data in the information leakage prevention apparatus.

This embodiment has described that the key extracting unit causes the server to perform the key extracting process.

This embodiment has also described that communication data of a data size less than the lower limit value is not temporarily suspended.

This embodiment has also described that communication data to an allowed destination is not temporarily suspended.

### Reference Signs List

100: information leakage prevention apparatus, 101: CPU, 102: RAM, 103: ROM, 104: hard disk, 105: display console, 106: communication board, 107: communication board, 108: bus, 109: LAN, 110: WAN, 111: Internet, 112: PC, 113: CPU, 114: RAM, 115: ROM, 116: hard disk, 117: display, 118: keyboard, 119: mouse, 120: communication board, 151: suspended information managing unit, 152: random number testing unit, 153: signature determining unit, 154: key extracting unit, 155: decryption unit, 156: keyword search unit, 157: alarm output unit, 158: communication unit, 159: storage unit, 201: suspended request information area, 202: network communication record area, 203: encryption program data format table, 204: random number testing program, 205: search keyword table, 206: keyword search program, 207: decryption program, 208: key extracting program, 209: suspended information managing program, 210: signature determining program, 211: alarm output program, 301: keyboard/mouse input recording program, 302: file input/output recording program, 303: network recording program, 304: keyboard/mouse input record information, 305: file input/output record information, 306: network record information, 400: information leakage prevention apparatus, 401: CPU, 402: RAM, 403: ROM, 404: hard disk, 405: display console, 406: communication board, 407: communication board, 408: bus, 409: LAN, 410: WAN, 411: Internet, 412: PC, 413: CPU, 414: RAM, 415: ROM, 416: hard disk, 417: display, 418: keyboard, 419: mouse, 420: communication board, 422: thin client terminal, 423: CPU, 424: RAM, 425: ROM, 426: display, 427: keyboard, 428: mouse, 429: communication board, 501: suspended request information area, 502: network communication record area, 503: encryption program data format table, 504: random number testing program, 505: search keyword table, 506: keyword search program, 507: decryption program, 509: suspended information managing program, 510: signature determining program, 511: alarm output program, 512: allowed size lower limit table, 513: allowed destination table, 601: key extracting program, 602: virtual hard disk, 701: keyboard/mouse input recording program, 702: file input/output recording program, 703: network recording program, 704: keyboard/mouse input record information, 705: file input/output record information, 706: network record information

## Claims

1. A data processing apparatus connected with a first communication path and a second communication path and connected with a communication apparatus through the first communication path, the data processing apparatus comprising:
a receiving unit to receive, from the first communication path, data transmitted by the communication apparatus to the second communication path;
a key extracting unit to, when the data received by the receiving unit has been encrypted, extract a key used to encrypt the data in the communication apparatus by analyzing a log describing content of data processing which has been performed in the communication apparatus;
a decryption unit to decrypt the data using the key extracted by the key extracting unit;
a keyword search unit to determine whether or not a keyword is included in a decryption result by the decryption unit; and
a transmitting unit to transmit the data to the second communication path when the keyword search unit determines that the keyword is not included in the decryption result.

2. The data processing apparatus according to claim 1,
wherein the key extracting unit analyzes content of a transmission process of the data described in the log to identify an encryption process performed on the data prior to the transmission process, analyzes content of the encryption process described in the log to identify an input process performed in association with the encryption process, and analyzes content of the input process described in the log to extract the key which has been used to encrypt the data.

3. The data processing apparatus according to claim 2,
wherein, as the key used to encrypt the data, the key extracting unit extracts a string that has been input to the communication apparatus in the input process.

4. The data processing apparatus according to claim 1, further comprising:
an encryption method determining unit to determine whether or not the data has been encrypted with a prescribed encryption method; and
an alarm output unit to output an alarm when the encryption method determining unit determines that the data has not been encrypted with the prescribed encryption method,
wherein when the encryption method determining unit determines that the data has been encrypted with the prescribed encryption method, the key extracting unit extracts the key used to encrypt the data.

5. The data processing apparatus according to claim 1, further comprising:
an alarm output unit to output an alarm when the keyword search unit determines that the keyword is included in the decryption result.

6. The data processing apparatus according to claim 1, further comprising:
an alarm output unit to output an alarm when the key extracting unit is unable to extract the key used to encrypt the data as a result of analyzing the log.

7. The data processing apparatus according to any one of claims 4 to 6,
wherein when the alarm output unit outputs the alarm, the transmitting unit does not transmit the data to the second communication path.

8. The data processing apparatus according to claim 1,
wherein the key extracting unit causes a management apparatus that manages the communication apparatus to analyze content of a transmission process of the data described in the log to identify an encryption process performed on the data prior to the transmission process, analyze content of the encryption process described in the log to identify an input process performed in association with the encryption process, and analyze content of the input process described in the log to extract the key used to encrypt the data.

9. The data processing apparatus according to claim 1, further comprising:
a data size comparing unit to compare a data size of the data with a prescribed data size,
wherein when the data size comparing unit determines that the data size of the data is less than the prescribed data size, the transmitting unit transmits the data to the second communication path.

10. The data processing apparatus according to claim 1, further comprising:
a destination determining unit to determine whether or not a destination of the data is an allowed destination,
wherein when the destination determining unit determines that the destination of the data is the allowed destination, the transmitting unit transmits the data to the second communication path.

11. A data processing method performed by a computer connected with a first communication path and a second communication path and connected with a communication apparatus through the first communication path, the data processing method comprising:
receiving, from the first communication path, data transmitted by the communication apparatus to the second communication path, by the computer;
extracting, when the received data has been encrypted, a key used to encrypt the data in the communication apparatus by analyzing a log describing content of data processing which has been performed in the communication apparatus, by the computer;
decrypting the data using the extracted key, by the computer;
determining whether or not a keyword is included in a decryption result, by the computer; and
transmitting the data to the second communication path when the computer determines that the keyword is not included in the decryption result, by the computer.

12. A program for causing a computer to function as the data processing apparatus according to claim 1.
